# FASCICULE DE BREVET EUROPEEN

(11) **EP 3 074 842 B1**
(45) Date de publication et mention de la délivrance du brevet: **10.01.2018**
(21) Numéro de dépôt: 14805305.1
(22) Date de dépôt: 01.12.2014
(51) Int. Cl.: G06F 3/0488, G05D 1/00, G08G 5/00, G06F 3/0487

(54) **POSTE DE CONTRÔLE DE DRONES**
STEUERSTATION FÜR DROHNE
DRONE CONTROL STATION

(30) Priorité: 29.11.2013 FR 1302789
(43) Date de publication de la demande: 05.10.2016
(73) Titulaire: THALES, 92200 Neuilly sur Seine (FR)
(72) Inventeur: GALIMBERTI, Arnaud, 91767 Palaiseau Cédex (FR); AGUERO, Cécilia, 91883 Massy (FR); PINHEIRO, Jean-Philippe, 94628 Rungis Cedex (FR)
(74) Mandataire: Lavoix
(86) Numéro de dépôt international: PCT/EP2014/076123
(87) Numéro de publication internationale: WO 2015/079065

(56) Documents cités:
- US-A1- 2005 047 629
- US-A1- 2007 164 990
- US-A1- 2009 086 165
- US-A1- 2009 087 029
- US-A1- 2012 094 700

## Description

La présente invention concerne un poste de contrôle de drones.

Plus particulièrement, la présente invention concerne un poste de contrôle d'une pluralité de drones, comprenant :
- un dispositif d'affichage configuré pour l'affichage d'éléments graphiques dont des éléments graphiques actifs configurés pour l'interaction d'un opérateur avec le poste de contrôle et/ou un ou plusieurs drones,
- une interface de commande pour la saisie par l'opérateur de commandes à destination du poste de contrôle, et
- un oculomètre configuré pour détecter la direction du regard de l'opérateur.

L'invention se situe dans le domaine des dispositifs de contrôle et de supervision d'une flotte de drones. Ces dispositifs ont vocation à permettre d'assurer le contrôle de tout ou partie des fonctions des drones, telles que la navigation des drones de la flotte, ainsi que d'interagir avec les charges utiles embarquées à bord des drones de la flotte, telles que par exemple des caméras d'observation du domaine visible, du domaine infrarouge, etc.

Les dispositifs de ce type qui sont connus permettent l'affichage sur le dispositif d'affichage d'éléments graphiques actifs, via lesquels l'opérateur interagit soit directement avec les drones, soit avec les éléments graphiques en question. Pour ce faire, l'opérateur du dispositif doit sélectionner le drone avec lequel il souhaite interagir, par exemple en activant une icône à cet effet, avant de saisir les commandes désirées via l'interface de commande.

Ce type de dispositif présente certains inconvénients. En effet, le nombre d'actions requises par l'opérateur avant de pouvoir interagir avec un drone en particulier est élevé, ce qui a pour effet à la fois de complexifier le traitement des données informatiques permettant d'accomplir les tâches en question, mais aussi d'augmenter le temps de réaction de l'opérateur et la charge cognitive associée à l'utilisation du dispositif de contrôle.

Document US2009/087029A1 décrit un système et méthode de contrôle de drones avec un dispositif d'affichage, qui est destiné à reconnaître le terrain. Document US2005/047629 présente une pluralité de modes de fonctionnement du poste de contrôle qui est activée et associée à l'un des éléments graphiques actifs en réponse à la détection du regard de l'opérateur. L'un des objectifs de l'invention est de pallier à ces inconvénients.

A cet effet, l'invention concerne un poste de contrôle d'une pluralité de drones tel que défini ci-dessus caractérisé en ce que le poste de contrôle est configuré pour sélectivement activer l'un d'une pluralité de premiers modes de fonctionnement du poste de contrôle respectivement associés à l'un des éléments graphiques actifs en réponse à la détection du regard de l'opérateur sur l'élément graphique actif correspondant, chaque premier mode de fonctionnement étant configuré pour permettre à l'opérateur d'interagir avec un ou plusieurs éléments graphiques et/ou un ou plusieurs drones via l'interface de commande selon un ensemble de fonctionnalités donné.

Selon d'autres aspects de l'invention, le poste de contrôle comprend une ou plusieurs des caractéristiques techniques suivantes, prise(s) isolément ou selon toute(s) combinaison(s) techniquement possible(s) :
- les éléments graphiques actifs comprennent une pluralité de flux vidéo respectivement fournis par l'un des drones et simultanément affichés via le dispositif d'affichage, chaque drone contrôlé par le poste de contrôle fournissant au moins un flux vidéo, les premiers modes de fonctionnement correspondant aux flux vidéo permettant à l'opérateur d'interagir avec les flux vidéo et au moins le drone fournissant le flux vidéo correspondant selon un premier ensemble de fonctionnalités ;
- l'agencement relatif des flux vidéo sur le dispositif d'affichage est utilisé, en complément de la position du regard de l'opérateur détectée par l'oculomètre, comme donnée d'entrée d'une ou plusieurs fonctionnalités d'au moins un ensemble de fonctionnalités associé à un élément graphique actif ;
- le premier ensemble de fonctionnalités comprend un ou plusieurs éléments du groupe formé par : une fonction de modification de l'agencement relatif des flux vidéo sur le dispositif d'affichage, une fonction de modification de l'orientation et/ou du niveau de grossissement d'une caméra d'acquisition embarquée à bord d'un drone, une fonction de basculement entre deux modes de fonctionnement d'un drone ;
- l'interface de commande comprend une surface tactile ;
- l'interface de commande comprend une tablette d'affichage tactile configurée pour l'affichage d'informations relatives aux drones ;
- tout ou partie des fonctionnalités des premiers modes de fonctionnement du poste de contrôle sont déclenchées par la réalisation via la surface tactile d'un geste ou d'une séquence de gestes du groupe formé par : la mise en contact d'un ou plusieurs doigts avec la surface tactile, le déplacement d'un doigt sensiblement selon une direction sur la surface tactile, le déplacement conjoint de plusieurs doigts sensiblement selon une direction sur la surface tactile, le déplacement de deux ou plus de doigts les uns relativement aux autres sur la surface tactile, le tapotement successif d'un ou plusieurs doigts sur la surface tactile ;
- le poste de contrôle est configuré pour activer un deuxième mode de fonctionnement en réponse à la détection du regard de l'opérateur dans une direction autre que celle du dispositif et dans lequel l'opérateur interagit avec un ou plusieurs drones via l'interface de commande ;
- le deuxième mode de fonctionnement est configuré pour l'interaction de l'opérateur avec un ou plusieurs drones selon un deuxième ensemble de fonctionnalités, le deuxième ensemble de fonctionnalités comprenant au moins une fonctionnalité différente des fonctionnalités des ensembles de fonctionnalités des premiers modes de fonctionnement du poste de contrôle; et
- le poste de contrôle est configuré pour modifier l'apparence d'un ou plusieurs éléments graphiques en réponse à la détection du regard de l'opérateur dans la direction correspondante, et pour modifier l'apparence de l'interface de commande en réponse à la détection du regard de l'opérateur dans une direction autre que celle d'un élément graphique actif.

L'invention sera mieux comprise à la lecture de la description détaillée qui va suivre, donnée uniquement à titre d'exemple et faite en référence aux figures annexées sur lesquelles :
- la Figure 1 est une illustration schématique d'un poste de contrôle selon l'invention ; et
- les Figures 2 à 6 sont des représentations schématiques de gestes réalisables par un opérateur pour interagir avec le poste de contrôle de la Figure 1.

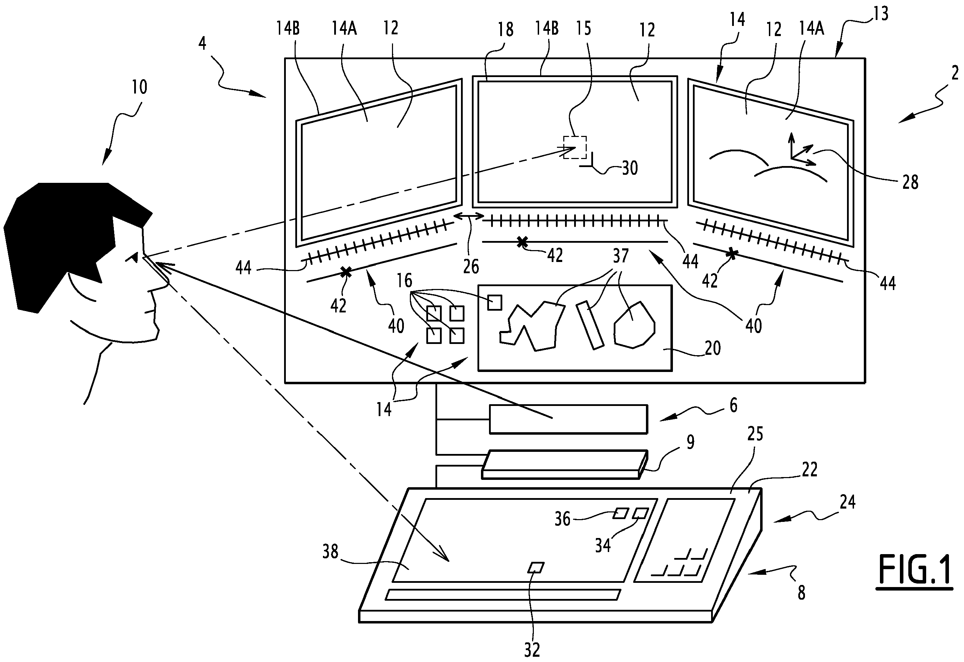

La figure 1 illustre un poste de contrôle 2 d'une pluralité de drones, ci après poste 2.

Le poste 2 comprend un dispositif d'affichage 4, ci-après dispositif 4, un oculomètre 6 ainsi qu'une interface de commande 8. En outre, le dispositif 2 comprend des moyens de traitement 9. Le poste 2 est manipulé par un opérateur 10.

Le poste 2 permet à l'opérateur 10 d'interagir avec une flotte de drones (non représentés) à chacun desquels est associé au moins un flux vidéo 12.

Chaque flux vidéo 12 est issu d'une caméra embarquée à bord du drone correspondant et a vocation à permettre la visualisation sur le dispositif 4 d'une zone surveillée par le drone. Les drones peuvent être de types différents, par exemple certains des drones sont des drones aéroportés, par exemple pour l'un au moins à voilure tournante ou pour un autre au moins à voilure fixe, et d'autres sont des drones terrestres ou encore sous-marins.

Par exemple, le poste 2 permet le contrôle simultané de deux drones, trois drones ou plus de trois drones.

Le dispositif 4 est configuré pour réaliser l'affichage d'éléments graphiques 14.

Les éléments graphiques 14 correspondent aux objets générés par le poste 2 et affichés sur le dispositif 4 lors de son fonctionnement.

Les éléments graphiques 14 renseignent l'opérateur 10 sur les drones et/ou le poste 2. Les éléments graphiques 14 comprennent des éléments graphiques actifs 14A configurés pour également permettre à l'opérateur d'interagir avec le poste 2 et/ou les drones via des fonctionnalités déclenchables par l'opérateur 10 par l'intermédiaire de l'interface de commande 8. Les éléments graphiques 14 comprennent également des éléments graphiques passifs 14B qui ne sont pas configurés pour l'interaction de l'opérateur avec le poste 2 ou les drones.

Les éléments graphiques actifs 14A comprennent les flux vidéo 12 fournis par les drones contrôlés par le poste 2. Le dispositif 4 est configuré pour afficher simultanément les flux vidéo 12.

Dans certains modes de réalisation, les éléments graphiques actifs 14A comprennent également un ou plusieurs symboles 15 en surimpression sur le flux vidéo 12 correspondant. Un symbole 15 est associé à certains points remarquables des images du flux vidéo, tels que par exemple une cible que le drone correspondant a vocation à détecter. Un symbole 15 du flux vidéo 12 se présente par exemple sous la forme d'un cadre en trait plein ou pointillé. Le symbole 15 est généré par le drone lui-même lors de la capture des images, ou encore par le poste 2 une fois le flux vidéo 12 reçu.

Les éléments graphiques actifs 14A comprennent également des boutons 16 virtuels.

Les éléments graphiques passifs 14B comprennent des contours 18 respectivement associés à un flux vidéo 12 et qui en délimitent le bord. En outre, les éléments graphiques passifs 14B comprennent une carte de navigation 20. La carte de navigation 20 renseigne l'opérateur sur l'emplacement des drones contrôlés par le poste 2.

Dans certains modes de réalisation, au moins un élément graphique actif 14A est affiché en surimpression sur un élément graphique passif 14B.

Par exemple, un bouton 16 est affiché en surimpression sur la carte de navigation 20.

Le dispositif 4 comprend un écran d'affichage 13. En variante, le dispositif 4 comprend au moins deux écrans d'affichage 13 entre lesquels les flux vidéos 12 sont répartis.

L'oculomètre 6 est configuré pour détecter la direction du regard de l'opérateur 10. Plus précisément, l'oculomètre 6 est configuré pour détecter que le regard de l'opérateur 10 porte ou non sur le dispositif 4. L'oculomètre 6 est en outre configuré pour détecter l'élément graphique 14 sur lequel porte le regard de l'opérateur 10 lorsque celui-ci regarde le dispositif 4.

L'interface de commande 8 est configurée pour permettre à l'opérateur 10 de saisir des commandes pour interagir avec le poste 2. Plus spécifiquement, l'interface de commande 8 est configurée pour permettre des interactions avec les éléments graphiques actifs 14A.

Préférentiellement, l'interface de commande 8 comprend une surface tactile 22.

Avantageusement, en référence à la Figure 1, l'interface de commande 8 comprend une tablette 24 d'affichage pourvue d'une surface tactile 22.

Par exemple, la tablette 24 présente une face supérieure 25 qui correspond à la surface tactile 22 et est simultanément configurée pour réaliser l'affichage d'informations relatives aux drones ou au fonctionnement du poste 2.

Ces modes de réalisation permettent de minimiser le nombre d'équipements du poste 2 et donc son coût, tout en améliorant son ergonomie.

Les moyens de traitement 9 sont raccordés au dispositif 4, à l'oculomètre 6 et à l'interface de commande 8. Les moyens de traitement 9 sont configurés pour prendre en charge le fonctionnement de ces divers équipements. Par exemple, les moyens de traitement 9 comprennent un dispositif informatique comportant un processeur et une mémoire (non représentés) comprenant des logiciels qui, lorsqu'ils sont exécutés par le processeur, permettent le fonctionnement du poste 2 dans son ensemble.

Les moyens de traitement 9 sont configurés pour sélectivement activer l'un d'une pluralité de premiers modes de fonctionnement du poste 2 respectivement associés à un élément graphique actif 14A en réponse à la détection, par l'oculomètre 6, du regard de l'opérateur sur l'élément graphique actif 14A correspondant.

A chaque premier mode de fonctionnement du poste 2 est associé un ensemble de fonctionnalités via lesquelles l'opérateur interagit avec un ou plusieurs éléments graphiques 14 et/ou un ou plusieurs drones.

Un premier mode de fonctionnement actif est désactivé en réponse à la détection du regard de l'opérateur dans une direction autre que celle de l'élément graphique actif 14A correspondant, ou à l'issue de l'exécution d'une fonctionnalité du premier mode de fonctionnement en question.

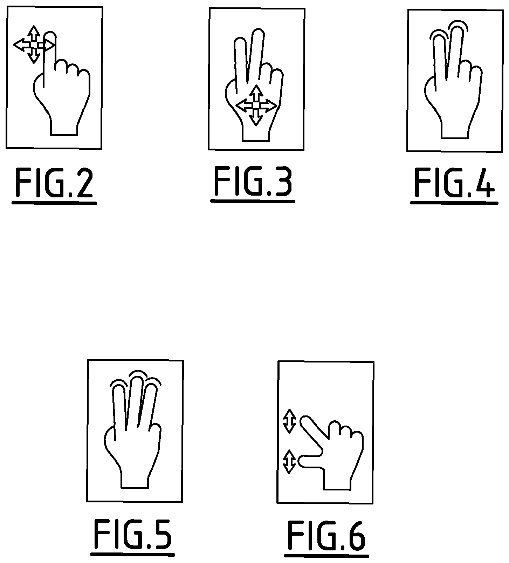

En référence aux Figures 2 à 6, une ou plusieurs des fonctionnalités des ensembles de fonctionnalités associés aux premiers modes de fonctionnements du poste 2 sont déclenchées par la réalisation via la surface tactile 22 de l'interface de commande 8 d'un geste ou d'une séquence de gestes du groupe formé par : la mise en contact d'un ou plusieurs doigts avec la surface tactile, le déplacement d'un doigt de l'opérateur 10 sensiblement selon une direction sur la surface tactile 22 (figure 2), le déplacement conjoint de plusieurs doigts sensiblement selon une direction sur la surface tactile 22 (figure 3), le tapotement successif d'un ou plusieurs doigts sur la surface tactile 22 (Figures 4 et 5), le déplacement de deux ou plus de doigts de l'opérateur les uns relativement aux autres sur la surface tactile 22 (Figure 6).

A noter que les fonctionnalités associées aux premiers modes de fonctionnement sont déclenchées par la réalisation simultanée du ou des gestes correspondants via la surface tactile 22 et la fixation du regard de l'opérateur sur l'élément graphique actif 14A associé au premier mode de fonctionnement correspondant au moins au commencement de la réalisation du geste ou du premier des gestes correspondants.

En particulier, les moyens de traitement 9 sont configurés pour sélectivement activer l'un d'une pluralité de premiers modes de fonctionnement respectivement associés à l'un des flux vidéo 12 affichés sur le dispositif 4 pour l'interaction de l'opérateur 10 avec les flux vidéos 12 et au moins le drone fournissant le flux vidéo 12 correspondant. Chacun de ces modes de fonctionnement est déclenché en réponse à la détection du regard de l'opérateur sur le flux vidéo 12 correspondant.

Par exemple, les premiers modes de fonctionnement associés aux flux vidéo 12 sont tous associés à un premier ensemble de fonctionnalités.

Le premier ensemble de fonctionnalités comprend un ou plusieurs des éléments du groupe formé par : une fonction de modification de l'agencement relatif des flux vidéo 12 (symbolisée par une flèche 26 sur la figure 1), une fonction de modification de l'orientation et/ou du niveau de grossissement d'un flux vidéo 12 (symbolisée par un repère 28 sur la figure 1), une fonction de basculement entre deux modes de fonctionnement d'un drone dont le flux vidéo 12 est visualisable sur le dispositif 4 (représentée par un symbole 30 sur la figure 1).

Par exemple, la fonction de modification d'agencement relatif des flux vidéo 12 permet à l'opérateur de modifier l'ordre ou l'emplacement des flux vidéo 12 sur le dispositif 4.

Dans certains modes de réalisation, l'agencement relatif des flux vidéo 12 sur le dispositif 4 est utilisé comme donnée d'entrée d'une ou plusieurs fonctionnalités associées à un ou plusieurs éléments graphiques actifs 14A en complément de la position du regard de l'opérateur détectée par l'oculomètre 6. Par exemple, dans le cas d'une juxtaposition de flux vidéo 12, l'exécution d'une fonctionnalité donnée relative à un élément graphique actif 14A déclenche une action impactant un flux vidéo 12 situé à emplacement prédéterminé dans la juxtaposition, par exemple le flux vidéo 12 central pour un nombre impair de flux vidéo 12, et/ou impactant le drone fournissant le flux vidéo correspondant. Ceci permet de simplifier le traitement réalisé par les moyens de traitement 9 et l'ergonomie du poste 2 pour la réalisation de fonctionnalités associées à un élément graphique 14 autre qu'un flux vidéo mais impactant néanmoins un drone ou un flux vidéo 12 donné.

En outre, la fonction de modification de l'orientation et/ou du niveau de grossissement d'un flux vidéo 12 permet à l'opérateur de déplacer le champ de vision d'une caméra embarquée à bord du drone et d'en modifier le niveau de grossissement, et donc de modifier le contenu des images du ou des flux vidéo 12 émis par le drone associé et affiché(s) sur le dispositif 4.

Par ailleurs, la fonction de basculement entre deux modes de fonctionnement d'un drone permet à l'opérateur de faire basculer un drone contrôlé par le poste 2 entre deux modes de fonctionnement du drone. Par exemple, le poste 2 est adapté pour faire basculer un drone entre un mode de fonctionnement dans lequel le drone a vocation à détecter les cibles dans le champ d'observation de la ou des caméras à son bord, et un mode de fonctionnement dans lequel le drone est verrouillé sur une ou plusieurs cibles préalablement détectées. Ce dernier mode de fonctionnement a par exemple pour effet de faire en sorte que le champ d'observation de la ou chaque caméra du drone demeure centré sur la ou les cibles en question au cours du temps.

Dans certains modes de réalisation, de manière alternative ou complémentaire, la fonction de basculement entre deux modes de fonctionnement d'un drone est associée à un symbole 15 sur le flux vidéo 12 correspondant.

En outre, les moyens de traitement 9 sont configurés pour activer un deuxième mode de fonctionnement du poste 2 en réponse à la détection du regard de l'opérateur 10 dans une direction autre que celle du dispositif 4. Dans le deuxième mode de fonctionnement, l'opérateur interagit avec un ou plusieurs des drones contrôlés par le poste 2 via l'interface de commande 8.

L'interaction de l'opérateur 10 avec le ou les drones dans le deuxième mode de fonctionnement est réalisée selon un deuxième ensemble de fonctionnalités. Préférentiellement, le deuxième ensemble de fonctionnalités comprend au moins une fonctionnalité différente des fonctionnalités des ensembles de fonctionnalités associés aux premiers modes de fonctionnement du poste 2. Ceci a pour effet d'accroître le nombre des fonctionnalités accessibles par l'opérateur 10 via le poste 2 tout en ne requérant pas l'adjonction d'éléments supplémentaires, par exemple au niveau de l'interface de commande 8.

Par exemple, comme pour le premier ensemble de fonctionnalités, une ou plusieurs des fonctionnalités du deuxième ensemble de fonctionnalité sont déclenchées par la réalisation via la surface tactile 22 d'un geste ou d'une séquence de gestes du groupe précédemment décrit en référence aux figures 2 à 6.

Par exemple, le deuxième ensemble de fonctionnalités comprend une fonction d'importation d'un drone en vue de son contrôle par le poste 2, ou encore d'exportation d'un drone contrôlé par le poste 2 vers un autre poste en vue de son contrôle par ce dernier. Par exemple, pour l'exportation d'un drone, l'opérateur 10 effectue, sur la surface tactile 22, un geste de glisser-déposer d'une icône 32 (visualisable sur la face supérieure 25 de la tablette 24) associée au drone à exporter vers une icône d'exportation 34. Pour l'importation d'un drone, l'opérateur clique sur une icône 36 prévue à cet effet sur l'interface de commande 8. En variante, l'une ou les deux fonctions d'importation et d'exportation sont alternativement ou également associées aux premiers modes de fonctionnement.

Par ailleurs, par exemple, le deuxième ensemble de fonctionnalités comprend une fonction de contrôle individuel et collectif de la navigation des drones contrôlés par le poste 2. Le deuxième ensemble de fonctionnalités peut également comprendre une fonction d'exportation d'un flux vidéo 12 vers un autre poste de contrôle.

En outre, les moyens de traitement 9 sont configurés pour modifier l'apparence de tout ou partie des éléments graphiques 14 affichés sur le dispositif 4 et des éléments affichés sur la tablette 24 en réponse à la détection de la direction du regard de l'opérateur 10 ou en réponse à l'exécution d'une fonctionnalité. En particulier, les moyens de traitement 9 sont configurés pour modifier l'apparence de tout ou partie des éléments graphiques actifs 14A et de tout ou partie des éléments graphiques passifs 14B.

Par exemple, les moyens de traitement 9 sont configurés pour modifier la couleur et/ou l'épaisseur du contour 18 d'un flux vidéo 12 en réponse à la détection du regard de l'opérateur dans la direction du flux vidéo 12 en question. Par exemple, le contour 18 voit son épaisseur augmentée, et passe d'une couleur orangée à une couleur bleue. En outre, par exemple, les moyens de traitement 9 modifient l'épaisseur et/ou la couleur d'un élément graphique 14, tel que par exemple un symbole 15, lorsque l'élément graphique 14 en question est regardé par l'opérateur 10. Par exemple, le symbole 15 voit son épaisseur et/ou la nature de son trait modifiée lorsque l'opérateur réalise une commande de basculement d'un mode de fonctionnement du drone associé vers un autre mode de fonctionnement

Dans certains modes de réalisation, les moyens de traitement 9 modifient également l'éclairage du dispositif 4 en réponse à la détection du regard de l'opérateur en direction du dispositif 4. En outre, le rétro-éclairage de la tablette 24 est également modifié en réponse à la détection du regard de l'opérateur dans une direction autre que celle du dispositif 4.

Dans certains modes de réalisation, les moyens de traitement 9 sont également configurés pour modifier l'apparence d'un élément graphique actif 14A figurant sur un flux vidéo 12 en réponse à la réalisation par l'opérateur d'une ou plusieurs fonctionnalités impliquant l'élément graphique actif 14A en question.

Lors du fonctionnement du poste 2 selon l'invention, l'opérateur 10 active l'un des premiers modes de fonctionnement en regardant un élément graphique actif 14A. Le premier mode de fonctionnement déclenché demeure actif tant que l'opérateur maintient son regard en direction de l'élément graphique actif 14A en question ou tant que l'opérateur ne déclenche pas l'exécution d'une fonctionnalité associée.

L'opérateur peut alors interagir avec les éléments graphiques actifs 14A, notamment les flux vidéo 12, pour interagir avec le poste 2 et/ou les drones contrôlés par le poste 2. Pour ce faire, il exécute des fonctionnalités associées au premier mode de fonctionnement en question via l'interface de commande 8. Ces fonctionnalités sont déclenchées par un ou plusieurs des gestes de l'ensemble décrit ci-dessus. Le regard de l'opérateur et les fonctionnalités dont l'opérateur commande l'exécution modifient l'apparence d'un ou plusieurs éléments graphiques 14.

A l'inverse, l'opérateur 10 déclenche le deuxième mode de fonctionnement du poste 2 dès lors que son regard ne porte pas sur le dispositif 4. Le deuxième mode de fonctionnement demeure actif tant que l'opérateur ne porte pas son regard sur un élément graphique actif 14A du dispositif 4 auquel cas le premier mode de fonctionnement associé est activé. L'apparence, par exemple le rétroéclairage, de la surface supérieure de la tablette 24 est modifiée en réponse au déclenchement du deuxième mode de fonctionnement. L'opérateur 10 interagit avec le ou les drones via le deuxième ensemble de fonctionnalités, qui sont respectivement déclenchées en réponse à la réalisation d'un ou plusieurs gestes du groupe précédemment décrit via la surface tactile 22.

Le poste 2 selon l'invention présente plusieurs avantages.

Tout d'abord, l'affichage simultané de flux vidéo 12 issus de différents drones sur le dispositif 4 permet le contrôle de plusieurs drones depuis un unique poste 2. Le coût associé au contrôle d'une flotte de drones est donc réduit lorsque mis en oeuvre par un poste 2 selon l'invention.

Le recours à un oculomètre 6 permet par ailleurs d'enrichir le fonctionnement du poste 2 tout en améliorant l'ergonomie du poste 2 pour l'opérateur.

L'activation de l'un des premiers modes de fonctionnement en réponse à la détection du regard de l'opérateur en direction d'un élément graphique actif 14A permet de minimiser le nombre d'opérations nécessaires à l'opérateur pour interagir la pluralité de drones que le poste 2 à vocation à contrôler. En conséquence, les traitements réalisés par les moyens de traitement 9 pour la réalisation des fonctions correspondantes sont simplifiés. En outre, ceci a pour effet que le poste 2 présente une ergonomie améliorée pour l'opérateur.

La présence de la surface tactile 22 a également pour effet de minimiser le nombre d'équipements requis pour que l'opérateur puisse interagir avec le poste 2. Le coût du poste 2 est minimisé et son ergonomie est améliorée plus avant.

Par ailleurs, la tablette 24 permet également de minimiser le nombre d'équipements que le poste 2 comprend.

En outre, les conditions de déclenchement du deuxième mode de fonctionnement du poste 2 permettent de simplifier le fonctionnement du poste 2. De même, l'ergonomie du poste est améliorée pour l'opérateur 10, dans la mesure où le poste 2, et en particulier l'oculomètre 6, présente un fonctionnement transparent pour ce dernier. En particulier, l'opérateur 10 n'a pas à modifier le comportement naturel de son regard pour manipuler le poste 2.

Les fonctionnalités du premier ensemble de fonctionnalités permettent de rendre le poste 2 adaptable à chaque opérateur, dans la mesure où l'opérateur a accès à des fonctions de modification de la disposition des flux vidéo 12 sur le dispositif 4. En outre, les traitements réalisés par les moyens de traitement 9 sont minimisés dans le cas d'une interaction de l'opérateur avec un flux vidéo 12, puisque le poste 2 n'impose pas à l'opérateur d'interagir avec des commandes spécifiquement dédiées à l'orientation de la caméra embarquée à bord des drones, telles que par exemple un joystick physique dédié, ou encore un joystick virtuel situé au niveau de l'interface de commande 8. Ces avantages s'appliquent également à la fonctionnalité de basculement entre deux modes de fonctionnement d'un drone.

Par ailleurs, les gestes permettant le déclenchement des fonctionnalités des ensembles de fonctionnalités sont simples à réaliser. Ils permettent à la fois d'améliorer l'ergonomie du poste 2, mais aussi de simplifier le traitement réalisé par les moyens de traitement 9 pour la mise en oeuvre du poste 2.

Dans certains modes de réalisation, les éléments graphiques actifs 14A comprennent, pour chaque drone contrôlé par le poste 2, un plan de navigation 37 en surimpression sur la carte 20. Un plan de navigation 37 se présente par exemple sous la forme d'un tracé sur la carte 20.

En outre, la tablette 24 est configurée pour l'affichage d'une carte géographique 38. Par exemple, la carte 20 est une sous partie de la carte géographique 38 et est centrée sur le drone associé à un flux vidéo donné.

Les fonctionnalités associées au premier mode de fonctionnement relatif à un plan de navigation 37 comprennent des fonctionnalités de modification du plan de navigation 37. Par exemple, l'une de ces fonctionnalités est mise en oeuvre par la sélection tactile par l'opérateur d'un ou plusieurs emplacements de la carte géographique 38. Ces emplacements seront alors intégrés au plan de navigation 37 correspondant.

Dans certains modes de réalisation, les éléments graphiques actifs 14A comprennent des barres temporelles 40 respectivement associées à l'un des flux vidéo 12 et sur lesquelles figurent des évènements 42 associés au fonctionnement du drone correspondant.

Les évènements 42 sont par exemple représentatifs de la détection par le drone correspondant d'une cible dans son champ d'observation, de l'instant de basculement entre des modes de fonctionnement sous l'action de l'opérateur 10, etc.

Une fonctionnalité associée à un évènement 42 est par exemple l'affichage sur le flux vidéo 12, par exemple en incrustation ou en médaillon, des images du flux vidéo 12 à l'instant correspondant, ou encore le déplacement sur la barre temporelle 40 d'un évènement 42.

En outre, les éléments graphiques actifs 14A comprennent des barres horaires 44 fournissant une échelle de lecture de barres temporelles 40 sur lesquelles figurent les évènements 42.

Par exemple, une fonctionnalité associée aux barres horaires 44 est la modification de l'échelle temporelle correspondante.

Dans certains modes de réalisation, les moyens de traitement 9 sont configurés pour déclencher un troisième mode de fonctionnement du poste 2 en réponse à la détection simultanée:
- du regard de l'opérateur dans la direction du dispositif 4, et
- du fait qu'aucun premier mode de fonctionnement n'est actif.

Dans le troisième mode de fonctionnement du poste 2, aucune des fonctionnalités des premiers modes de fonctionnement et du deuxième mode de fonctionnement n'est déclenchable, en particulier par l'interface de commande 8.

En pratique, le troisième mode de fonctionnement correspond à un mode de fonctionnement transitoire entre deux premiers modes de fonctionnement du poste 2 ou entre un premier mode de fonctionnement et le deuxième mode de fonctionnement du poste 2.

## Revendications

1. Poste de contrôle d'une pluralité de drones, comprenant :
- un dispositif d'affichage (4) configuré pour l'affichage d'éléments graphiques dont des éléments graphiques actifs (14A) configurés pour l'interaction d'un opérateur (10) avec le poste de contrôle (2) et/ou un ou plusieurs drones,
- une interface de commande (8) pour la saisie par l'opérateur de commandes à destination du poste de contrôle (2), et
- un oculomètre (6) configuré pour détecter la direction du regard de l'opérateur (10),
**caractérisé en ce que** le poste de contrôle (2) est configuré pour sélectivement activer l'un d'une pluralité de premiers modes de fonctionnement du poste de contrôle (2) respectivement associés à l'un des éléments graphiques actifs (14A) en réponse à la détection du regard de l'opérateur (10) sur l'élément graphique actif (14) correspondant, chaque premier mode de fonctionnement étant configuré pour permettre à l'opérateur d'interagir avec un ou plusieurs éléments graphiques (14) et/ou un ou plusieurs drones via l'interface de commande (8) selon un ensemble de fonctionnalités donné.

2. Poste de contrôle selon la revendication 1, **caractérisé en ce que** les éléments graphiques actifs (14A) comprennent une pluralité de flux vidéo (12) respectivement fournis par l'un des drones et simultanément affichés via le dispositif d'affichage (4), chaque drone contrôlé par le poste de contrôle (2) fournissant au moins un flux vidéo (12), les premiers modes de fonctionnement correspondant aux flux vidéo (12) permettant à l'opérateur d'interagir avec les flux vidéo (12) et au moins le drone fournissant le flux vidéo correspondant selon un premier ensemble de fonctionnalités.

3. Poste de contrôle selon la revendication 2, **caractérisé en ce que** l'agencement relatif des flux vidéo (12) sur le dispositif d'affichage (4) est utilisé, en complément de la position du regard de l'opérateur détectée par l'oculomètre (6), comme donnée d'entrée d'une ou plusieurs fonctionnalités d'au moins un ensemble de fonctionnalités associé à un élément graphique actif (14A).

4. Poste de contrôle selon la revendication 2 ou 3, **caractérisé en ce que** le premier ensemble de fonctionnalités comprend un ou plusieurs éléments du groupe formé par: une fonction de modification de l'agencement relatif des flux vidéo (12) sur le dispositif d'affichage (4), une fonction de modification de l'orientation et/ou du niveau de grossissement d'une caméra d'acquisition embarquée à bord d'un drone, une fonction de basculement entre deux modes de fonctionnement d'un drone.

5. Poste de contrôle selon l'une quelconque des revendications précédentes, **caractérisé en ce que** l'interface de commande (8) comprend une surface tactile (22).

6. Poste de contrôle selon la revendication 5, **caractérisé en ce que** l'interface de commande (8) comprend une tablette d'affichage (24) tactile configurée pour l'affichage d'informations relatives aux drones.

7. Poste de contrôle selon la revendication 5 ou 6, **caractérisé en ce que** tout ou partie des fonctionnalités des premiers modes de fonctionnement du poste de contrôle (2) sont déclenchées par la réalisation via la surface tactile (22) d'un geste ou d'une séquence de gestes du groupe formé par : la mise en contact d'un ou plusieurs doigts avec la surface tactile (22), le déplacement d'un doigt sensiblement selon une direction sur la surface tactile (22), le déplacement conjoint de plusieurs doigts sensiblement selon une direction sur la surface tactile (22), le déplacement de deux ou plus de doigts les uns relativement aux autres sur la surface tactile (22), le tapotement successif d'un ou plusieurs doigts sur la surface tactile (22).

8. Poste de contrôle selon l'une quelconque des revendications précédentes, **caractérisé en ce que** le poste de contrôle (2) est configuré pour activer un deuxième mode de fonctionnement en réponse à la détection du regard de l'opérateur (10) dans une direction autre que celle du dispositif (4) et dans lequel l'opérateur interagit avec un ou plusieurs drones via l'interface de commande (8).

9. Poste de contrôle selon la revendication 8, **caractérisé en ce que** le deuxième mode de fonctionnement est configuré pour l'interaction de l'opérateur (10) avec un ou plusieurs drones selon un deuxième ensemble de fonctionnalités, le deuxième ensemble de fonctionnalités comprenant au moins une fonctionnalité différente des fonctionnalités des ensembles de fonctionnalités des premiers modes de fonctionnement du poste de contrôle (2).

10. Poste de contrôle selon l'une quelconque des revendications précédentes, **caractérisé en ce qu'**il est configuré pour modifier l'apparence d'un ou plusieurs éléments graphiques (14) en réponse à la détection du regard de l'opérateur dans la direction correspondante, et pour modifier l'apparence de l'interface de commande (8) en réponse à la détection du regard de l'opérateur (10) dans une direction autre que celle d'un élément graphique actif (14A).

## Patentansprüche

1. Steuerstation einer Vielzahl von Drohnen, umfassend:
- eine Anzeigevorrichtung (4), die für die Anzeige grafischer Elemente konfiguriert ist, darunter von aktiven grafischen Elementen (14A), die für die Interaktion eines Bedieners (10) mit der Steuerstation (2) und/oder einer oder mehreren Drohnen konfiguriert sind,
- eine Steuerschnittstelle (8) für die Eingabe durch den Bediener von Befehlen, die für die Steuerstation (2) bestimmt sind, und
- ein Okulometer (6), das konfiguriert ist, um die Blickrichtung des Bedieners (10) zu erfassen,
**dadurch gekennzeichnet, dass** die Steuerstation (2) konfiguriert ist, um einen Modus einer Vielzahl erster Betriebsmodi der Steuerstation (2), die jeweils einem der aktiven grafischen Elemente (14A) zugeordnet sind, als Antwort auf die Ermittlung des Blicks des Bedieners (10) auf das entsprechende aktive grafische Element (14) selektiv zu aktivieren, wobei jeder erste Betriebsmodus konfiguriert ist, um dem Bediener zu erlauben, mit einem oder mehreren grafischen Elementen (14) und/oder einer oder mehreren Drohnen über die Steuerschnittstelle (8) gemäß einer bestimmten Funktionsgruppe zu interagieren.

2. Steuerstation nach Anspruch 1, **dadurch gekennzeichnet, dass** die aktiven grafischen Elemente (14A) eine Vielzahl von Videoströmen (12) umfassen, die jeweils von einer der Drohnen bereitgestellt und gleichzeitig über die Anzeigevorrichtung (4) angezeigt werden, wobei jede von der Steuerstation (2) gesteuerte Drohne mindestens einen Videostrom (12) bereitstellt, wobei die ersten Betriebsmodi, die den Videoströmen (12) entsprechen, dem Bediener erlauben, mit den Videoströmen (12) und mindestens der Drohne, die den entsprechenden Videostrom bereitstellt, gemäß einer ersten Funktionsgruppe zu interagieren.

3. Steuerstation nach Anspruch 2, **dadurch gekennzeichnet, dass** die relative Ausbildung der Videoströme (12) auf der Anzeigevorrichtung (4) in Ergänzung der Position des vom Okulometer (6) ermittelten Blicks des Bedieners als Eingangsangabe einer oder mehrerer Funktionen mindestens einer einem aktiven grafischen Element (14A) zugeordneten Funktionsgruppe verwendet wird.

4. Steuerstation nach Anspruch 2 oder 3, **dadurch gekennzeichnet, dass** die erste Funktionsgruppe ein oder mehrere Gruppenelemente umfasst, die gebildet sind von: einer Änderungsfunktion der relativen Ausbildung der Videoströme (12) auf der Anzeigevorrichtung (4), eine Änderungsfunktion der Ausrichtung und/oder der Vergrößerungsstufe einer On-Board-Erfassungskamera einer Drohne, einer Umschaltfunktion zwischen zwei Betriebsmodi einer Drohne.

5. Steuerstation nach einem der vorangehenden Ansprüche, **dadurch gekennzeichnet, dass** die Steuerschnittstelle (8) eine taktile Oberfläche (22) umfasst.

6. Steuerstation nach Anspruch 5, **dadurch gekennzeichnet, dass** die Steuerschnittstelle (8) ein taktiles Anzeigetablet (24) umfasst, das für die Anzeige von Informationen konfiguriert ist, die sich auf die Drohnen beziehen.

7. Steuerstation nach Anspruch 5 oder 6, **dadurch gekennzeichnet, dass** alle oder ein Teil der Funktionen der ersten Betriebsmodi der Steuerstation (2) mittels der Durchführung über die taktile Oberfläche (22) einer Geste oder einer Sequenz von Gesten der Gruppe ausgelöst werden, die gebildet ist von: dem Inkontaktversetzen eines oder mehrerer Finger mit der taktilen Oberfläche (22), der Verlagerung eines Fingers etwa in einer Richtung auf der taktilen Oberfläche (22), der gleichzeitigen Verlagerung mehrerer Finger etwa in einer Richtung auf der taktilen Oberfläche (22), der Verlagerung von zwei oder mehreren Fingern relativ zueinander auf der taktilen Oberfläche (22), dem aufeinanderfolgenden Tippen eines oder mehrerer Finger auf der taktilen Oberfläche (22).

8. Steuerstation nach einem der vorangehenden Ansprüche, **dadurch gekennzeichnet, dass** die Steuerstation (2) konfiguriert ist, um einen zweiten Betriebsmodus als Antwort auf die Ermittlung des Blicks des Bedieners (10) in eine andere Richtung als die der Vorrichtung (4) zu aktivieren und in dem der Bediener mit einer oder mehreren Drohnen über die Steuerschnittstelle (8) interagiert.

9. Steuerstation nach Anspruch 8, **dadurch gekennzeichnet, dass** der zweite Betriebsmodus für die Interaktion des Bedieners (10) mit einer oder mehreren Drohnen gemäß einer zweiten Funktionsgruppe konfiguriert ist, wobei die zweite Funktionsgruppe mindestens eine Funktion umfasst, die sich von den Funktionen der Funktionsgruppen der ersten Betriebsmodi der Steuerstation (2) unterscheidet.

10. Steuerstation nach einem der vorangehenden Ansprüche, **dadurch gekennzeichnet, dass** sie konfiguriert ist, um das Erscheinungsbild eines oder mehrerer grafischer Elemente (14) als Antwort auf die Ermittlung des Blicks des Bedieners in die entsprechende Richtung zu verändern und um das Erscheinungsbild der Steuerschnittstelle (8) als Antwort der Ermittlung des Blicks des Bedieners (10) in eine andere Richtung als die eines aktiven grafischen Elements (14A) zu verändern.

## Claims

1. Control station for a plurality of drones, comprising:
- a display device (4) configured to display graphical elements including active graphic elements (14A) configured for the interaction of an operator (10) with the control station (2) and/or one or several drones,
- a control interface (8) for input to the control station (2) by the commands operator, and
- an oculometer (6) configured to detect the direction of the gaze of the operator (10)
**characterized in that**
the control station (2) is configured to selectively activate one of a plurality of first modes of operation of the control station (2) respectively associated with one of the active graphic elements (14A) in response to the detection of the gaze of the operator (10) on the corresponding active graphic element (14), wherein each first operating mode is configured to allow the operator to interact with one or more graphic elements (14) and/or one or more drones via the control interface (8) according to a given set of functionalities.

2. Control station according to claim 1,
**characterized in that**
the active graphics elements (14A) comprise a plurality of video streams (12) respectively provided by one of the drones and simultaneously displayed via the display device (4), wherein each drone controlled by the control station (2) provides at least one video stream (12), and wherein the first modes of operation corresponding to the video streams (12) enable the operator to interact with the video streams (12) and at least the drone providing the corresponding video stream according to a first set of functionalities.

3. Control station according to claim 2,
**characterized in that**
the relative arrangement of the video streams (12) on the display device (4) is used, in addition to the position of the gaze of the operator detected by the oculometer (6), as input data of one or more functionalities of at least one set of functionalities associated with an active graphic element (14A).

4. Control station according to claim 2 or 3,
**characterized in that**
the first set of functionalities comprises one or more elements of the group formed by: a function of modifying the relative arrangement of the video streams (12) on the device display (4), a function for modifying the orientation and/or the magnification level of an on-board acquisition camera aboard a drone, and a switching function between two modes of operation of a drone.

5. Control station according to any one of the preceding claims, **characterized in that** the control interface (8) comprises a touch-sensitive surface (22).

6. Control station according to claim 5, **characterized in that** the control interface (8) comprises a touch-sensitive display tablet (24) configured to display information relating to drones.

7. Control station according to claim 5 or 6, **characterized in that** all or part of the functionalities of the first operating modes of the control station (2) are triggered by the detection via the touch-sensitive surface (22) of a gesture or a sequence of gestures of the group formed by: contacting one or more fingers with the touch-sensitive surface (22), moving a finger substantially in one direction on the touch-sensitive surface (22), moving a plurality of fingers together substantially in one direction on the touch-sensitive surface (22), moving two or more fingers relative to one another on the touch-sensitive surface (22), successively tapping one or more fingers on the touch-sensitive surface (22).

8. Control station according to any one of the preceding claims, **characterized in that** the control station (2) is configured to activate a second mode of operation in response to the detection of the gaze of the operator (10) in a direction other than that of the device (4), wherein the operator interacts with one or more drones via the control interface (8).

9. Control station according to claim 8, **characterized in that** the second mode of operation is configured for the interaction of the operator (10) with one or more drones according to a second set of functionalities, wherein the second set of functionalities comprises at least one functionality that is different from the functionalities of the sets of functionalities of the first modes of operation of the control station (2).

10. Control station according to any one of the preceding claims, **characterized in that** it is configured to change the appearance of one or more graphical elements (14) in response to the detection of the gaze of the operator in the corresponding direction, and to modify the appearance of the control interface (8) in response to the detection of the gaze of the operator (10) in a direction other than that of an active graphical element (14A).
